# EUROPÄISCHE PATENTSCHRIFT

(11) **EP 3 140 878 B1**
(45) Veröffentlichungstag und Bekanntmachung des Hinweises auf die Patenterteilung: **09.01.2019**
(21) Anmeldenummer: 15721684.7
(22) Anmeldetag: 06.05.2015
(51) Int. Cl.: H01M 8/02, H01M 4/42, H01M 4/96, H01M 12/08, H01M 4/02, H01M 4/90, H01M 8/10, H01M 8/24, H01M 4/86

(54) **GASDIFFUSIONSELEKTRODE UND DEREN VERWENDUNG**
GAS DIFFUSION ELECTRODE AND USE THEREOF
ÉLECTRODE À DIFFUSION GAZEUSE ET UTILISATION DE LADITE ÉLECTRODE

(30) Priorität: 07.05.2014 DE 102014208575
(43) Veröffentlichungstag der Anmeldung: 15.03.2017
(73) Patentinhaber: Fraunhofer Gesellschaft zur Förderung der angewandten Forschung E.V., 80686 München (DE)
(72) Erfinder: SCHADE, Wolfgang, 38644 Goslar (DE); GABLER, Andreas, 10439 Berlin (DE)
(74) Vertreter: Friese Goeden Patentanwälte PartGmbB
(86) Internationale Anmeldenummer: PCT/EP2015/059937
(87) Internationale Veröffentlichungsnummer: WO 2015/169845

(56) Entgegenhaltungen:
- DE-A1-102011 100 461
- US-A1- 2004 142 101
- US-A1- 2008 182 012
- US-A1- 2012 021 303
- JAE-HO KIM ET AL: "Preparation and characterization of C/NiPTFE electrode using NiPTFE composite plating for alkaline fuel cells", INTERNATIONAL JOURNAL OF HYDROGEN ENERGY, ELSEVIER SCIENCE PUBLISHERS B.V., BARKING, GB, Bd. 36, Nr. 2, 24. Oktober 2010 (2010-10-24), Seiten 1720-1729, XP028132964, ISSN: 0360-3199, DOI: 10.1016/J.IJHYDENE.2010.10.078 [gefunden am 2010-10-30]

## Beschreibung

Die Erfindung betrifft eine Gasdiffusionselektrode mit einer Elektronenleitschicht mit einer ersten Seite und einer gegenüberliegenden zweiten Seite, wobei die erste Seite mit einer Mikrostrukturierung versehen ist. Gasdiffusionselektroden dieser Art können in Batterien, Akkumulatoren, Elektrolyseuren oder Brennstoffzellen verwendet werden.

Aus der DE 10 2011 100 461 A1 ist eine gattungsgemäße Gasdiffusionselektrode bekannt. Diese Gasdiffusionselektrode enthält eine Elektronenleitschicht aus einem metallischen Werkstoff, welche an der Oberfläche mit einer hydrophoben Strukturierung versehen ist. In der Elektronenleitschicht befinden sich weiter Gaszuführungskanäle, mit welchen gasförmige Reaktanten an die Oberfläche der Elektronenleitschicht geführt werden können. Die Oberfläche ist weiterhin mit zumindest einem Katalysator versehen. Zum Betrieb der Gasdiffusionselektrode taucht diese in einen flüssigen Elektrolyten ein, so dass sich an der hydrophoben Oberfläche eine Dreiphasengrenze ausbildet. An der Dreiphasengrenze treffen gasförmige Reaktanten, flüssiger Elektrolyt und festes Katalysatormaterial aufeinander.

Diese bekannte Gasdiffusionselektrode weist jedoch den Nachteil auf, dass der flüssige Elektrolyt trotz der hydrophoben Eigenschaften der Oberflächenstrukturierung die Oberfläche der Elektronenleitschicht in einigen Betriebszuständen vollständig benetzen kann, so dass die Ausbildung einer Dreiphasengrenze verhindert wird.

Die US 2008/182012 A1 beschreibt eine Mikrobrennstoffzelle, welche mit üblichen Strukturierungsverfahren der Halbleiterelektronik auf einem Siliziumsubstrat hergestellt werden kann. Die darin vorgeschlagene Brennstoffzelle verwendet jedoch keinen flüssigen Elektrolyt. Vielmehr soll lediglich Sauerstoff und Wasserstoff umgesetzt werden. Hierzu verwendet die Brennstoffzelle eine makroporöse Struktur als Trägermaterial. Die Porosität wird dadurch erzielt, dass zunächst eine Schicht aus kleinen Kugeln abgeschieden wird und das schichtbildende Material im Anschluss in die Zwischenräume angebracht wird. Nach Entfernen der Kugeln entsteht eine poröse Schicht. Diese weist jedoch keine Oberflächenstruktur auf, sondern eine Porigkeit des Bulkmaterials.

Ausgehend vom Stand der Technik liegt der Erfindung somit die Aufgabe zugrunde, eine Gasdiffusionselektrode bereitzustellen, welche eine erhöhte Zuverlässigkeit und/oder ein breiteres Einsatzspektrum aufweist.

Die Aufgabe wird erfindungsgemäß durch eine Gasdiffusionselektrode gemäß Anspruch 1 sowie eine Batterie, einen Akkumulator, einen Elektrolyseur oder eine galvanische Zelle gemäß Anspruch 9 gelöst.

Erfindungsgemäß wird eine Gasdiffusionselektrode mit einer Elektronenleitschicht vorgeschlagen. Die Elektronenleitschicht weist eine vergleichsweise hohe Leitfähigkeit bzw. einen geringen elektrischen Widerstand auf, um einen elektrischen Strom in die Reaktionszone zuzuführen bzw. einen elektrischen Strom aus der Reaktionszone abzuführen. Hierdurch werden Elektronen übertragende, gleichzeitig stattfindende Redoxreaktionen an der Gasdiffusionselektrode möglich.

An einigen Ausführungsformen der Erfindung kann die Elektronenleitschicht ein Metall oder eine Legierung enthalten oder daraus bestehen. Hierdurch wird eine hinreichend hohe Leitfähigkeit sichergestellt. In einigen Ausführungsformen der Erfindung kann die Elektronenleitschicht mit einem Material hoher Leitfähigkeit beschichtet sein, beispielsweise Gold oder Silber, um auf diese Weise die elektrische Leitfähigkeit der Elektronenleitschicht zu erhöhen. Die Schichtdicke kann in diesem Fall zwischen etwa 20 nm und etwa 100 nm betragen.

In einigen Ausführungsformen der Erfindung kann die Elektronenleitschicht aus einem Material bestehen, welches eine Passivierungsschicht gegen die korrosive Wirkung der Reaktionsprodukte und/oder Reaktionsedukte bzw. saure oder alkalische Elektrolyte bildet. Hierdurch wird die Langzeitstabilität der Gasdiffusionselektrode verbessert, so dass die Einsatzdauer erhöht sein kann.

Die Elektronenleitschicht kann in einigen Ausführungsformen der Erfindung eine Dicke von etwa 10 µm bis etwa 150 µm aufweisen. In anderen Ausführungsformen der Erfindung kann die Elektronenleitschicht eine Dicke von etwa 25 µm bis etwa 100 µm aufweisen. Hierdurch werden einerseits ein geringer Materialverbrauch und andererseits eine hinreichende elektrische Leitfähigkeit ermöglicht.

Die Elektronenleitschicht der Erfindung weist eine erste Seite und eine gegenüberliegende zweite Seite auf. Zumindest die erste Seite ist mit einer Mikrostrukturierung versehen, so dass zumindest die erste Seite der Elektronenleitschicht hydrophile Eigenschaften aufweist. Die Mikrostrukturierung wird durch Laserstrahlung erzeugt, welche während eines Herstellungsschrittes auf die erste Seite der Elektronenleitschicht einwirkt. Insbesondere kann hierzu Laserstrahlung mit einer Pulsdauer von weniger als einer Nanosekunde oder weniger als 100 Femtosekunden verwendet werden. In einigen Ausführungsformen der Erfindung kann die Elektronenleitschicht während der Laserbestrahlung einem Prozessgas ausgesetzt sein, beispielsweise Stickstoff.

In einigen Ausführungsformen der Erfindung kann die Mikrostrukturierung einer Vergrößerung der Oberfläche der ersten Seite um einen Faktor 20 bis 60 bewirken. In einigen Ausführungsformen der Erfindung kann die Mikrostrukturierung einer Vergrößerung der Oberfläche der ersten Seite um einen Faktor 25 bis 55 bewirken. Hierdurch wird die Größe der Dreiphasengrenze erhöht, bei gleichzeitig kompakten Abmessungen der erfindungsgemäßen Gasdiffusionselektrode.

In einigen Ausführungsformen der Erfindung ist die Mikrostrukturierung nur an der Oberfläche der ersten Seite vorhanden, wobei das übrige Material der Elektronenleitschicht nicht porös ist. Damit steht weiterhin der gesamte Querschnitt für die elektrische Stromleitung zur Verfügung.

Erfindungsgemäß wird die hydrophile erste Seite der Elektronenleitschicht mit einer hydrophoben Membran in Kontakt gebracht. Auch die hydrophobe Membran weist eine erste Seite und eine gegenüberliegende zweite Seite auf, wobei die zweite Seite der Membran auf der ersten Seite der Elektronenleitschicht angeordnet ist. Hierdurch wird verhindert, dass die hydrophile Elektronenleitschicht bei Betrieb der Vorrichtung vollständig mit Elektrolyt bedeckt wird, so dass sich stets zuverlässig eine Dreiphasengrenze ausbilden kann.

In einigen Ausführungsformen der Erfindung kann die hydrophobe Membran auf die erste Seite der Elektronenleitschicht laminiert oder aufgewalzt werden. In einigen Ausführungsformen der Erfindung können die Elektronenleitschicht und die Membran in einer Walzstrasse aufeinander gepresst werden, so dass sich eine mechanische Verbindung zwischen der Elektronenleitschicht und der Membran ausbildet, wobei Teile der Mikrostrukturierung zumindest teilweise in die Membran eindringen. In wiederum einer anderen Ausführungsform der Erfindung kann die Membran durch Aufrakeln, Aufspritzen, Spincoating oder Gasphasenabscheidung unmittelbar auf der ersten Seite der Elektronenleitschicht erzeugt werden.

In einigen Ausführungsformen der Erfindung kann die Membran Polytetrafluorethylen enthalten oder daraus bestehen. Dieses Material ist einerseits chemisch stabil gegen eine Vielzahl von Säuren, Laugen oder gasförmigen oxidierenden Substanzen, so dass ein zuverlässiger Betrieb über einen längeren Zeitraum möglich ist. Andererseits kann das Material günstig hergestellt und verarbeitet werden, so dass sich die erfindungsgemäße Gasdiffusionselektrode auch für die Massenfertigung eignet. Das Material ist weiterhin hinreichend duktil, so dass eine hydrophile Struktur in die Membran eindringen kann.

In einigen Ausführungsformen der Erfindung kann die Membran eine Dicke von etwa 10 µm bis etwa 125 µm aufweisen. In einigen Ausführungsformen der Erfindung kann die Membran eine Dicke von etwa 25 µm bis etwa 100 µm aufweisen. Dies erlaubt einerseits einen effektiven Gastransport, so dass gasförmige Edukte der Dreiphasengrenze der Gasdiffusionselektrode zugeführt werden können oder gasförmige Produkte aus der Dreiphasengrenze abgeführt werden können. Gleichzeitig ist die Membran mechanisch hinreichend stabil, um einen zuverlässigen Betrieb der Gasdiffusionselektrode zu ermöglichen.

In einigen Ausführungsformen der Erfindung ist die Membran gasdurchlässig ausgestaltet. Dies kann einerseits durch Poren sichergestellt werden, welche beispielsweise bei Herstellung der Membran in einem Sinterprozess oder bei Herstellung aus einem vorgereckten Polymer eingebracht werden können. Die Poren können in einigen Ausführungsformen der Erfindung einen Durchmesser von 1 µm bis etwa 10 µm oder einen Durchmesser von etwa 2 µm bis etwa 6 µm oder einen Durchmesser von etwa 100 nm bis etwa 500 nm aufweisen.

In einigen Ausführungsformen der Erfindung kann die Elektronenleitschicht Titan und/oder Gold und/oder Silber und/oder Molybdän und/oder Wolfram und/oder eine Edelstahllegierung enthalten oder daraus bestehen. Diese Materialien sind entweder beständig gegen den korrosiven Angriff von Säuren und Laugen oder bilden eine stabile Oxid- oder Nitrit- oder Oxinitritschicht an ihrer Oberfläche aus, so dass die Stabilität der Elektronenleitschicht gegenüber korrosiven Angriffen durch den Elektrolyt während der Lebensdauer der Gasdiffusionselektrode gesichert ist. Gleichzeitig verbleiben dann im Kern der Elektronenleitschicht hinreichend große Querschnittsanteile mit metallischer Bindung, welche einen geringen elektrischen Widerstand der Elektronenleitschicht sicherstellen. Da die Elektronenleitschicht nur an ihrer Oberfläche mit der erfindungsgemäß vorgeschlagenen Strukturierung versehen ist und es sich erfindungsgemäß nicht um einen porösen oder gesinterten Festkörper handelt, kann kein korrosiver Angriff auf tiefer gelegene Bereiche im Volumen der Elektronenleitschicht erfolgen.

In einigen Ausführungsformen kann die Elektronenleitschicht Nickel enthalten, welches einerseits eine hinreichend hohe elektronische Leitfähigkeit sicherstellt und andererseits katalytische Eigenschaften aufweist, so dass die Elektronenleitschicht gleichzeitig als Katalysator für die an der Gasdiffusionselektrode ablaufenden Reaktionen ist.

Die Mikrostrukturierung weist Einzelstrukturen mit einem Aspektverhältnis von etwa 1:3 bis etwa 3:1 auf. Hierdurch werden eine hinreichende Vergrößerung der Oberfläche und gute hydrophile Eigenschaften ermöglicht.

Die Mikrostrukturierung enthält oder besteht aus Einzelstrukturen deren Durchmesser an einer Basis etwa 10 µm bis etwa 30 µm beträgt. Die Länge dieser Einzelstrukturen kann ebenfalls etwa 10 µm bis etwa 30 µm betragen. Die Länge wird dabei zwischen der Basis und der Spitze der Einzelstrukturen bestimmt. Als Basis im Sinne der vorliegenden Beschreibung wird diejenige Fläche bzw. im Querschnitt die Strecke angesehen, an welcher die Mikrostrukturierung in das unstrukturierte Volumen der Elektronleitschicht übergeht.

In einigen Ausführungsformen der Erfindung kann die Elektronenleitschicht eine Mehrzahl von Elektrolytkanälen enthalten. Die Elektrolytkanäle können sich von der zweiten Seite zur ersten Seite der Elektronenleitschicht erstrecken. Hierdurch kann ein flüssiger Elektrolyt von der zweiten Seite der Elektronenleitschicht zugeführt werden, so dass sich dieser durch die Elektrolytkanäle zur ersten Seite ausbreitet. Die hydrophobe Membran sorgt dabei dafür, dass der Elektrolyt die erste Seite der Elektronenleitschicht nicht vollständig benetzt, so dass auch gasförmige Edukte zugeführt werden können, beispielsweise Sauerstoff.

In einigen Ausführungsformen der Erfindung können die Elektrolytkanäle jeweils einen Durchmesser von etwa 50 µm bis etwa 150 µm aufweisen. In einigen Ausführungsformen der Erfindung können die Elektrolytkanäle jeweils einen Durchmesser von etwa 300 µm bis etwa 1000 µm aufweisen. In einigen Ausführungsformen der Erfindung können die Elektrolytkanäle durch spanende Bearbeitung oder durch Lasermaterialbearbeitung in die Elektronenleitschicht eingebracht werden.

In einigen Ausführungsformen der Erfindung kann auf der ersten Seite der Elektronenleitschicht zumindest ein Katalysator aufgebracht sein. Hierdurch kann Katalysatormaterial eingespart werden, indem für die Elektronenleitung ein anderes, meist kostengünstigeres oder einfacher verfügbares Material verwendet wird. In einigen Ausführungsformen der Erfindung kann der Katalysator Platin und/oder Nickel und/oder Silber und/oder Palladium und/oder Manganoxide und/oder Rhodium enthalten oder daraus bestehen. In einigen Ausführungsformen der Erfindung kann die Flächenbelegung des Katalysators zwischen etwa 0,05 mg·cm⁻² und etwa 0,4 mg·cm⁻² betragen. In einigen Ausführungsformen der Erfindung kann die Flächenbelegung des Katalysators zwischen etwa 0,1 mg·cm⁻² und etwa 0,35 mg·cm⁻² betragen. Gegenüber an sich bekannten Konzepten für Gasdiffusionselektroden kann somit teures und seltenes Katalysatormaterial eingespart werden, da dieses nur auf der Oberfläche der Elektronenleitschicht aufgebracht ist. Katalysatormaterial wird somit nur dort eingesetzt, wo sich die Dreiphasengrenze ausbildet. Die mechanische Stabilität der Gasdiffusionselektrode und die elektrische Leitfähigkeit werden durch günstigere Materialien sichergestellt.

In einigen Ausführungsformen der Erfindung kann der Katalysator durch thermisches Aufdampfen, Sputtern, Plasmaspritzen oder andere, an sich bekannte PVD- oder CVD-Verfahren auf die erste Seite der Elektronenleitschicht aufgebracht werden. Dies ermöglicht eine gute Kontrolle der abgeschiedenen Schichtdicke und einen sparsamen Verbrauch des Katalysatormaterials.

In einigen Ausführungsformen der Erfindung kann die Gasdiffusionselektrode weiterhin einen Separator enthalten, welcher auf der zweiten Seite der Elektronenleitschicht angeordnet ist. Der Separator kann elektrisch isolierend ausgebildet sein, jedoch Ionenleitung ermöglichen. In einigen Ausführungsformen der Erfindung kann der Separator zumindest ein Polymer enthalten oder aus zumindest einem Polymer bestehen. In einigen Ausführungsformen der Erfindung enthält der Separator zumindest ein Ionomer, d.h. einen thermoplastischen Kunststoff, welcher durch Copolymerisation eines unpolaren mit einem polaren Monomer gewonnen werden kann. In einigen Ausführungsformen der Erfindung kann der Separator sulfoniertes Tetrafluorethylen enthalten. Ein solches Material kann als Ionenaustauschermembran verwendet werden oder eine Ionenaustauschermembran bilden.

In einigen Ausführungsformen der Erfindung kann der Separator eine Dicke von etwa 10 µm bis etwa 200 µm aufweisen. In anderen Ausführungsformen der Erfindung kann der Separator eine Dicke von etwa 20 µm bis etwa 100 µm aufweisen. Dies sichert einerseits eine hinreichende elektrischen Isolation und gleichzeitig eine gute Permeabilität für den Elektrolyten bzw. für dessen Bestandteile.

Nachfolgend soll die Erfindung anhand von Figuren ohne Beschränkung des allgemeinen Erfindungsgedankens näher erläutert werden. Dabei zeigt
Fig. 1 den Querschnitt durch eine erfindungsgemäße Gasdiffusionselektrode.
Fig. 2 zeigt einen Ausschnitt aus der in Fig. 1 dargestellten Gasdiffusionselektrode.
Fig. 3 zeigt eine rasterelektronenmikroskopische Aufnahme der Oberflächenstrukturierung der Elektronenleitschicht in einer ersten Ausführungsform der Erfindung.
Fig. 4 zeigt eine rasterelektronenmikroskopische Aufnahme mit einem Elektrolytkanal.
Fig. 5 zeigt eine rasterelektronenmikroskopische Aufnahme der Oberflächenstrukturierung der Elektronenleitschicht in einer zweiten Ausführungsform der Erfindung
Fig. 6 zeigt Strom- und Spannungsverläufe bei Betrieb eines mit der erfindungsgemäßen Gasdiffusionselektrode ausgestatteten Zink-Sauerstoff-Akkumulators.
Fig. 7 zeigt die U-I-Kennlinie des Zink-Sauerstoff-Akkumulators.

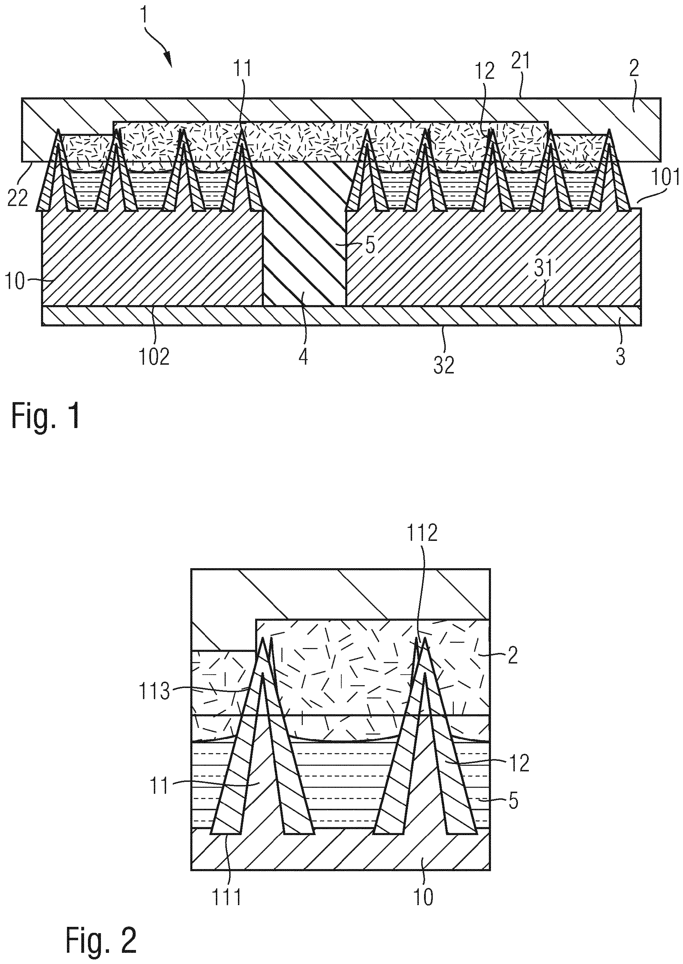

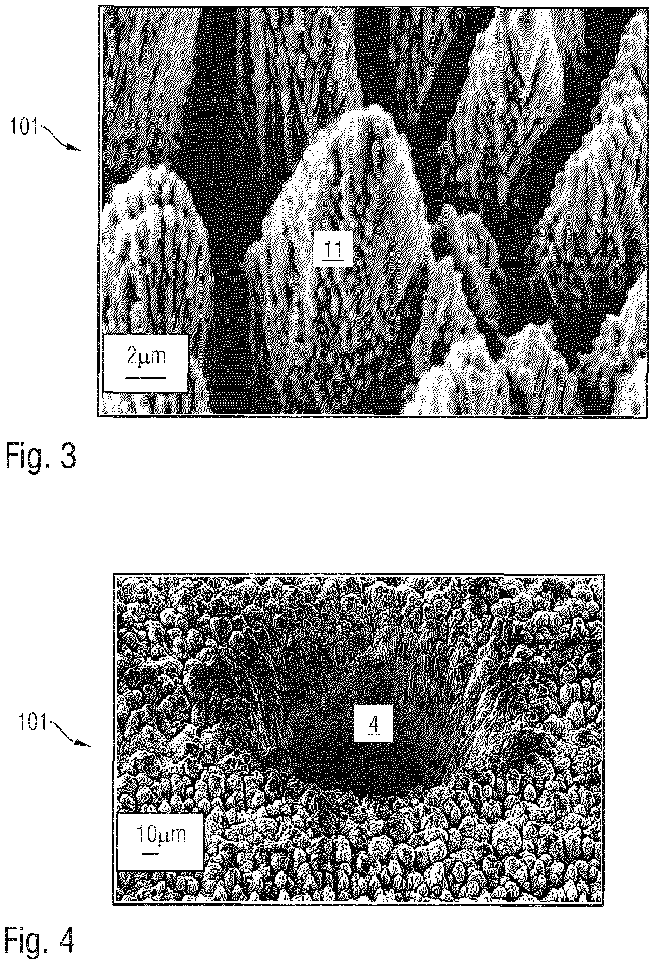

Anhand der Fig. 1 bis 4 wird die erfindungsgemäße Gasdiffusionselektrode näher erläutert. Dabei zeigen die Figuren 1 und 2 einen Querschnitt durch die Gasdiffusionselektrode. Die Figuren 3 und 4 zeigen elektronenmikroskopische Aufnahmen der Elektronenleitschicht.

Die Gasdiffusionselektrode 1 umfasst eine Elektronenleitschicht 10. Die Elektronenleitschicht 10 kann aus einem Metall oder Legierung gefertigt sein, um eine gute elektrische Leitfähigkeit zu ermöglichen, d.h. die Ausbildung eines Elektronenstromes mit geringen ohm'schen Verlusten. Gleichzeitig soll die Elektronenleitschicht 10 eine hinreichende Widerstandskraft gegen korrosive Medien bieten, welche bei Betrieb der Gasdiffusionselektrode mit dieser in Kontakt kommen. In einigen Ausführungsformen kann die Elektronenleitschicht 10 daher beispielsweise Titan, Gold oder eine Edelstahllegierung enthalten oder daraus bestehen.

Die Elektronenleitschicht 10 weist eine erste Seite 101 und eine gegenüberliegende zweite Seite 102 auf. Die erste Seite 101 ist mit einer Mikrostrukturierung 11 versehen. Die Mikrostrukturierung 11 wird durch Laserbestrahlung, insbesondere durch Bestrahlung mit einem Kurzpulslaser, erzeugt. Die Mikrostrukturierung 11 weist an der Basis 111 einen Durchmesser von etwa 10 µm bis etwa 30 µm auf und kann an der Spitze 112 einen Durchmesser von etwa 1 µm bis etwa 5 µm aufweisen. Hierdurch ergibt sich eine in etwa kegelförmige Grundform der Mikrostrukturierung 11. Die einzelnen Kegel weisen ein Aspektverhältnis von etwa 3:1 bis etwa 1:3 auf. Die Mikrostrukturierung 11 bewirkt, dass die erste Seite 101 der Elektronenleitschicht 10 hydrophil ist, d.h. ein wässriger Elektrolyt 5 haftet an der ersten Seite 101 der Elektronenleitschicht 10.

Die erste Seite 101 ist weiterhin mit zumindest einem Katalysator 12 beschichtet. Der Katalysator 12 kann beispielsweise durch Sputtern oder andere, an sich bekannte CVD- oder PVD-Verfahren aufgebracht werden. Die Dichte bzw. Flächenbelegung kann zwischen etwa 0,05 mg·cm⁻² und etwa 0,4 mg·cm⁻² betragen. Somit wird erheblich weniger Katalysatormaterial benötigt, als bei anderen, an sich bekannten Gasdiffusionselektroden. Der Katalysator senkt die Aktivierungsenergie für die an der Oberfläche der Gasdiffusionselektrode ablaufende Reaktion.

Um an der ersten Seite 101 eine Dreiphasengrenze auszubilden, steht die erste Seite 101 mit einer hydrophoben Membran 2 in Kontakt. Die hydrophobe Membran 2 weist eine erste Seite 21 und eine gegenüberliegende zweite Seite 22 auf. Die zweite Seite 22 ist mit der ersten Seite 101 der Elektronenleitschicht 10 in Kontakt, wobei ein Teilabschnitt 113 der Mikrostrukturierung 11 in die Membran 2 eindringt.

Die hydrophobe Membran 2 ist gasdurchlässig ausgestaltet, so dass sich an der ersten Seite 101 der Elektronenleitschicht 10 eine Dreiphasengrenze zwischen dem festen Katalysator 12, dem flüssigen Elektrolyten 5 und einem Prozessgas ausbilden kann, welches der ersten Seite der Elektronenleitschicht durch die Membran 2 zugeführt wird.

Der restliche Elektrolyt 5 kann über Elektrolytkanäle 4 zugeführt werden, welche beispielsweise durch Laserbearbeitung in die Elektronenleitschicht 10 eingebracht werden. Die Elektrolytkanäle 4 erstrecken sich von der zweiten Seite 102 zur ersten Seite 101 der Elektronenleitschicht 10, so dass sich die Zwischenräume der Mikrostrukturierung 11 ausgehend von den Elektrolytkanälen 4 mit dem wässrigen Elektrolyt füllen können.

Auf der zweiten Seite 102 der Elektronenleitschicht 10 ist weiterhin ein Separator 3 angebracht. Der Separator 3 weist eine erste Seite 31 auf, welche mit der zweiten Seite 102 der Elektronenleitschicht 10 in Kontakt steht. Die gegenüberliegende Seite 32 des Separators 3 steht mit einem Elektrolyt in Kontakt. Der Separator 3 ist elektrisch isolierend ausgebildet, so dass zwischen dem Elektrolyt und der Elektronenleitschicht 10 kein elektronischer Strom fließt. Gleichzeitig ist der Separator 3 jedoch ionenpermeabel, so dass der Elektrolyt 5 in die Elektrolytkanäle 4 eindringen kann.

Fig. 3 zeigt nochmals eine elektronenmikroskopische Aufnahme der ersten Seite 101 der Elektronenleitschicht 10. Deutlich erkennbar ist die Mikrostrukturierung 11 in Form einzelner, in etwa kegelförmiger Säulen. Die Zwischenräume zwischen benachbarten Einzelstrukturen der Mikrostrukturierung dienen zumindest teilweise zur Aufnahme des Elektrolyten, so dass sich dort eine Dreiphasengrenze ausbilden kann.

Fig. 4 zeigt eine elektronenmikroskopische Aufnahme eines Elektrolytkanals 4, welcher durch Lasermaterialbearbeitung in die Elektronenleitschicht 10 eingebracht wurde.

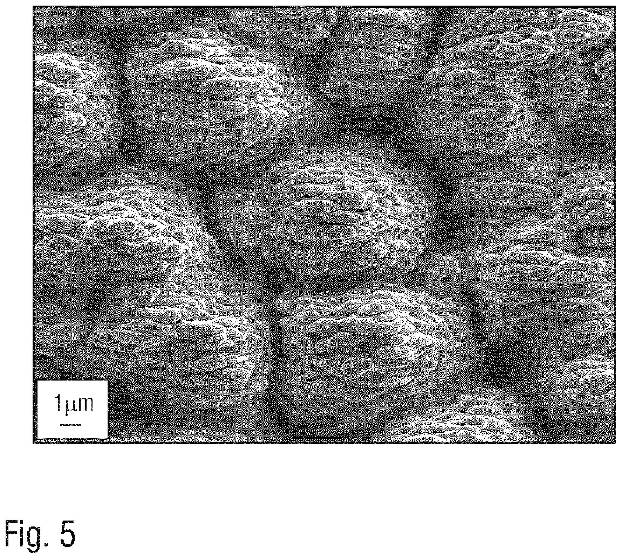

Fig. 5 zeigt eine rasterelektronenmikroskopische Aufnahme der Oberflächenstrukturierung der Elektronenleitschicht in einer zweiten Ausführungsform der Erfindung. In der zweiten Ausführungsform der Erfindung enthält die Elektronenleitschicht als wesentlichen Bestandteil Nickel. Nickel kann einerseits als Elektronenleitschicht mit hinreichend kleinem elektrischen Widerstand eingesetzt werden, so dass sich bei Betrieb der Gasdiffusionselektrode kleine ohm'sche Verluste ergeben. Daneben ist Nickel kostengünstig und leicht verfügbar. Da Nickel darüber hinaus auch ein in alkalischen Medien gut einsetzbarer Katalysator ist, kann in einigen Ausführungsformen der Erfindung auf die Beschichtung der Elektronenleitschicht mit einem zusätzlichen Katalysatormaterial verzichtet werden.

Wie Fig. 5 zeigt, kann auch die erste Seite einer Elektronenleitschicht, welche Nickel enthält oder daraus besteht, mit der erfindungsgemäßen Mikrostrukturierung versehen werden.

In einem ersten Ausführungsbeispiel wurde die erfindungsgemäße Gasdiffusionselektrode in Kontakt mit einer Gegenelektrode gebracht. Die Gegenelektrode liegt an der zweiten Seite 32 des Separators 3 an und besteht aus einer Zinkpaste mit alkalischem Elektrolyten. Die erste Seite 21 der hydrophoben Membran 2 steht in Kontakt mit reinem Sauerstoff, welcher mittels eines Gasballons unter Atmosphärendruck zugeführt wird.

Die Elektronenleitschicht der verwendeten Gasdiffusionselektrode enthält Titan, als Katalysator kommt Platin mit einer Flächenbelegung von 0,2 mg·cm⁻² zum Einsatz

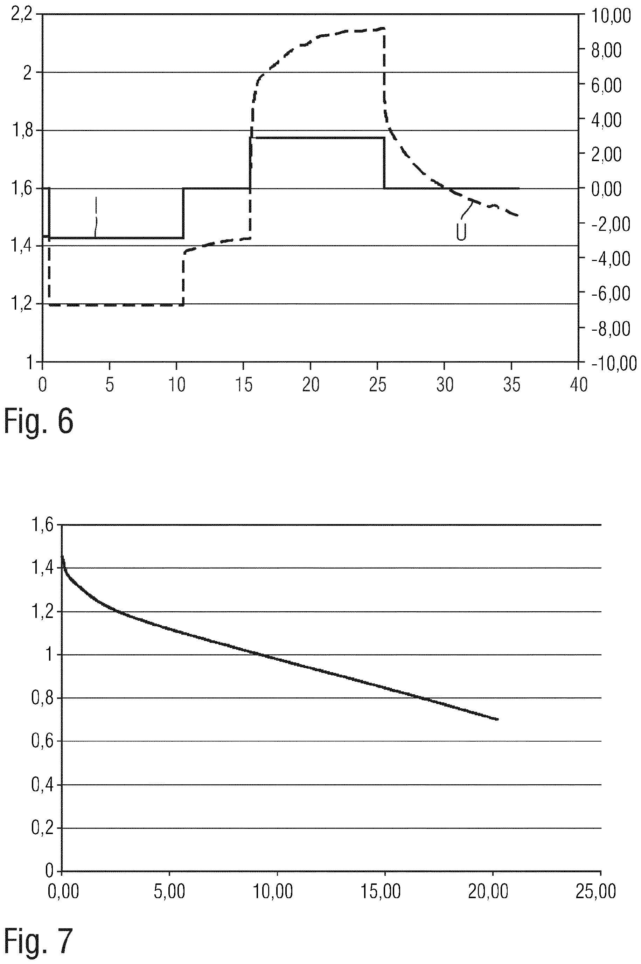

Fig. 7 zeigt die elektrische Spannung zwischen der Elektronenleitschicht 10 und der Gegenelektrode auf der Ordinate und den zwischen der Elektronleitschicht 10 und der Gegenelektrode fließenden Strom in mA auf der Abszisse. Es ergibt sich ein nahezu linearer Zusammenhang zwischen Strom und Spannung im Bereich von etwa 3 mA bis 20 mA. Die Leerlaufspannung der so gebildeten Batterie beträgt etwa 1,45 V. Fig. 7 bestätigt daher die Funktion der erfindungsgemäßen Gasdiffusionselektrode.

Fig. 6 zeigt die Spannung U auf der linken Ordinate und den elektrischen Strom I auf der rechten Ordinate gegen die Messzeit auf der Abszisse. Dargestellt sind ein Entlade- und ein Ladezyklus des im Ausführungsbeispiel verwendeten Zink-Sauerstoff-Akkumulators.

Zu Beginn der Messung beträgt die Leerlaufspannung des Akkumulators etwa 1,45 V.

Es folgt eine Entladung mit etwa 3 mA über etwa 10 Minuten. Dabei stellt sich eine konstante Spannung von 1,2 V ein. Nach dem Ende der Entladung steigt die Spannung während der folgenden 5 Minuten wieder auf die ursprüngliche Leerlaufspannung an.

Es folgt ein Ladezyklus mit einem konstanten Ladestrom von etwa 3 mA. Hierbei stellt sich eine stetig steigende Ladespannung ein, welche nach 10 Minuten etwa 2,15 V erreicht. Nach Abschalten des Ladestroms sinkt die Spannung in den folgenden 10 Minuten wieder auf die Leerlaufspannung des Zink-Sauerstoff-Akkumulators ab. Fig. 6 zeigt somit eindeutig, dass die im Ausführungsbeispiel verwendete Testzelle das typische, von einem Akkumulator erwartete Verhalten zeigt. Somit ist die Funktionsweise der erfindungsgemäßen Gasdiffusionselektrode nachgewiesen.

Selbstverständlich ist die Erfindung nicht auf die in den Figuren dargestellten Ausführungsformen beschränkt. Die vorstehende Beschreibung ist daher nicht als beschränkend sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Soweit die Ansprüche und die vorstehende Beschreibung "erste" Und "zweite" Merkmale definieren, so dient diese Bezeichnung der Unterscheidung zweier gleichartiger Merkmale, ohne eine Rangfolge festzulegen.

## Patentansprüche

1. Gasdiffusionselektrode (1) mit einer Elektronenleitschicht (10), mit einer ersten Seite (101) und einer gegenüberliegenden zweiten Seite (102), wobei die erste Seite (101) mit einer Mikrostrukturierung (11) versehen ist, wobei
die Gasdiffusionselektrode (1) weiterhin eine hydrophobe Membran (2) mit einer ersten Seite (21) und einer gegenüberliegenden zweiten Seite (22) enthält, wobei die zweite Seite (22) der Membran (2) auf der ersten Seite (101) der Elektronenleitschicht (1) angeordnet ist, **dadurch gekennzeichnet,**
**dass** die Mikrostrukturierung (11) durch Bestrahlung mit Laserstrahlung erhältlich ist und
**dass** die Mikrostrukturierung (11) Einzelstrukturen mit einem Aspektverhältnis von etwa 1:3 bis 3:1 aufweist und
**dass** die Mikrostrukturierung (11) Einzelstrukturen enthält, deren Durchmesser an einer Basis (111) etwa 10 µm bis etwa 30 µm beträgt.

2. Gasdiffusionselektrode nach Anspruch 1, **dadurch gekennzeichnet, dass** die Membran (2) Polytetrafluorethylen enthält oder daraus besteht, und/oder
dass die Membran (2) eine Dicke von etwa 10 µm bis etwa 100 µm aufweist und/oder dass die Membran (2) gasdurchlässig ausgestaltet ist.

3. Gasdiffusionselektrode nach Anspruch 1 oder 2, **dadurch gekennzeichnet, dass** die Elektronenleitschicht (10) Titan und/oder Nickel und/oder Gold und/oder Silber und/oder Molybdän und/oder Wolfram und/oder eine Edelstahllegierung enthält oder daraus besteht.

4. Gasdiffusionselektrode nach einem der Ansprüche 1 bis 3, **dadurch gekennzeichnet, dass** die Mikrostrukturierung (11) teilweise in die hydrophobe Membran (2) eingebettet ist.

5. Gasdiffusionselektrode nach einem der Ansprüche 1 bis 4, **dadurch gekennzeichnet, dass** die Elektronenleitschicht (10) eine Mehrzahl von Elektrolytkanälen (4) enthält und/oder dass die Elektronenleitschicht (10) eine Mehrzahl von Elektrolytkanälen (4) enthält, welche jeweils einen Durchmesser von etwa 50 µm bis etwa 150 µm aufweisen.

6. Gasdiffusionselektrode nach einem der Ansprüche 1 bis 5, **dadurch gekennzeichnet, dass** auf der ersten Seite (101) der Elektronenleitschicht (10) zumindest ein Katalysator (12) aufgebracht ist oder
dass auf der ersten Seite (101) der Elektronenleitschicht (10) zumindest ein Katalysator (12) aufgebracht ist, welcher Platin und/oder Nickel und/oder Silber und/oder Palladium und/oder zumindest ein Manganoxid und/oder Rhodium enthält oder daraus besteht.

7. Gasdiffusionselektrode nach Anspruch 6, **dadurch gekennzeichnet, dass** die Flächenbelegung des Katalysators (12) zwischen etwa 0,05 mg·cm⁻² und etwa 0,4 mg·cm⁻² beträgt oder dass die Flächenbelegung des Katalysators (12) zwischen etwa 0,1 mg·cm⁻² und etwa 0,35 mg·cm⁻² beträgt

8. Gasdiffusionselektrode nach einem der Ansprüche 1 bis 7, **dadurch gekennzeichnet, dass** auf der zweiten Seite (102) der Elektronenleitschicht (10) ein Separator (3) angeordnet ist und/oder dass auf der zweiten Seite (102) der Elektronenleitschicht (10) ein Separator (3) angeordnet ist, welcher eine Dicke von etwa 10 µm bis etwa 200 µm aufweist oder
dass auf der zweiten Seite (102) der Elektronenleitschicht (10) ein Separator (3) angeordnet ist, welcher eine Dicke von etwa 20 µm bis etwa 100 µm aufweist.

9. Batterie oder Akkumulator oder Elektrolyseur oder galvanische Zelle mit einer Gasdiffusionselektrode (1) nach einem der Ansprüche 1 bis 8.

## Claims

1. Gas diffusion electrode (1) with an electron conducting layer (10), comprising a first side (101) and an opposite second side (102), the first side (101) being provided with a micro-structuring (11), wherein the gas diffusion electrode (1) further comprises a hydrophobic membrane (2) with a first side (21) and an opposite second side (22), the second side (22) of the membrane (2) being arranged on the first side (101) of the electron conducting layer (1) **characterized**
**in that** the micro-structuring (11) can be obtained by radiation with laser irradiation and
**in that** the micro-structuring (11) has individual structures with an aspect ratio from approximately 1:3 to 3:1 and
**in that** the micro-structuring (11) contains individual structures, the diameter of which ranges, at the base (111), from approximately 10 µm to approximately 30 µm.

2. Gas diffusion electrode according to claim 1, **characterized in that** the membrane (2) contains or consists of polytetrafluoroethylene, and/or
**in that** the membrane (2) has a thickness of approximately 10 µm to approximately 100 µm and/or
**in that** the membrane (2) is designed so as to be permeable to gas.

3. Gas diffusion electrode according to claim 1 or 2, **characterized in that** the electron conducting layer (10) contains or consists of titanium and/or nickel and/or gold and/or silver and/or molybdenum and/or tungsten and/or a stainless steel alloy.

4. Gas diffusion electrode according to any of claims 1 to 3, **characterized in that** the micro-structuring (11) is partially embedded in the hydrophobic membrane (2).

5. Gas diffusion electrode according to any of claims 1 to 4, **characterized in that** the electron conducting layer (10) contains a plurality of electrolyte channels (4) and/or
**in that** the electron conducting layer (10) contains a plurality of electrolyte channels (4), each having a diameter of approximately 50 µm to approximately 150 µm.

6. Gas diffusion electrode according to any of claims 1 to 5, **characterized in that** at least one catalyst (12) is applied on the first side (101) of the electrode conducting layer (10) or
**in that** at least one catalyst (12) is applied on the first side (101) of the electron conducting layer (10), said catalyst containing or consisting of platinum and/or nickel and/or silver and/or palladium and/or at least one manganese oxide and/or rhodium.

7. Gas diffusion electrode according to claim 6, **characterized in that** the area coating of the catalyst (12) ranges between approximately 0.05 mg·cm⁻² and approximately 0.4 mg·cm⁻² or **in that** the area coating of the catalyst (12) ranges between approximately 0.1 mg·cm⁻² and approximately 0.35 mg·cm⁻².

8. Gas diffusion electrode according to any of claims 1 to 7, **characterized in that** a separator (3) is arranged on the second side (102) of the electron conducting layer (10) and/or
**in that** a separator (3) is arranged on the second side (102) of the electron conducting layer (10) that has a thickness from approximately 10 µm to approximately 200 µm or
**in that** a separator (3) is arranged on the second side (102) of the electron conducting layer (10) that has a thickness from approximately 20 µm to approximately 100 µm.

9. Battery or accumulator or electrolyzer or galvanic cell, comprising the gas diffusion electrode (1) according to any of claims 1 to 8.

## Revendications

1. Électrode à diffusion gazeuse (1) comportant une couche conductrice d'électrons (10), une première face (101) et une seconde face (102) opposée, la première face (101) étant pourvue d'une micro-structuration (11),
l'électrode à diffusion gazeuse (1) comprenant en outre une membrane hydrophobe (2) présentant une première face (21) et une seconde face (22) opposée, la seconde face (22) de la membrane (2) étant disposée sur la première face (101) de la couche conductrice d'électrons (10), **caractérisée en ce que**
la micro-structuration (11) peut être obtenue par irradiation au rayonnement laser, et **en ce que**
la micro-structuration (11) présente des structures individuelles ayant un rapport d'aspect d'environ 1 : 3 à 3 : 1, et **en ce que**
la micro-structuration (11) comprend des structures individuelles dont le diamètre à la base (111) est d'environ 10 µm à environ 30 µm.

2. Électrode à diffusion gazeuse selon la revendication 1,
**caractérisée en ce que**
la membrane (2) contient ou est constituée de polytétrafluoroéthylène (1), et/ou **en ce que**
la membrane (2) présente une épaisseur d'environ 10 µm à environ 100 µm, et/ou **en ce que**
la membrane (2) est conçue perméable aux gaz.

3. Électrode à diffusion gazeuse selon la revendication 1 ou 2,
**caractérisée en ce que**
la couche conductrice d'électrons (10) contient ou est constituée de titane et/ou de nickel et/ou d'or et/ou d'argent et/ou de molybdène et/ou de tungstène et/ou d'un alliage d'acier inoxydable.

4. Électrode à diffusion gazeuse selon l'une des revendications 1 à 3, **caractérisée en ce que**
la micro-structuration (11) est partiellement noyée dans la membrane hydrophobe (2).

5. Électrode à diffusion gazeuse selon l'une des revendications 1 à 4, **caractérisée en ce que**
la couche conductrice d'électrons (10) comprend une pluralité de canaux à électrolyte (4), et/ou **en ce que**
la couche conductrice d'électrons (10) comprend une pluralité de canaux à électrolyte (4) qui présentent chacun un diamètre d'environ 50 µm à environ 150 µm.

6. Électrode à diffusion gazeuse selon l'une des revendications 1 à 5, **caractérisée en ce que**
au moins un catalyseur (12) est appliqué sur la première face (101) de la couche conductrice d'électrons (10), ou **en ce que**
au moins un catalyseur (12) est appliqué sur la première face (101) de la couche conductrice d'électrons (10), qui contient ou est constitué de platine et/ou de nickel et/ou d'argent et/ou de palladium et/ou d'au moins un oxyde de manganèse et/ou de rhodium.

7. Électrode à diffusion gazeuse selon la revendication 6,
**caractérisée en ce que**
le recouvrement de surface du catalyseur (12) est compris entre environ 0,05 mg•cm⁻² et environ 0,4 mg•cm⁻², ou **en ce que**
le recouvrement de surface du catalyseur (12) est compris entre environ 0,1 mg•cm⁻² et environ 0,35 mg•cm⁻².

8. Électrode à diffusion gazeuse selon l'une des revendications 1 à 7, **caractérisée en ce que**
un séparateur (3) est agencé sur la seconde face (102) de la couche conductrice d'électrons (10), ou **en ce que**
un séparateur (3) est agencé sur la seconde face (102) de la couche conductrice d'électrons (10), qui présente une épaisseur d'environ 10 µm à environ 200 µm, ou **en ce que**
un séparateur (3) est agencé sur la seconde face (102) de la couche conductrice d'électrons (10), qui présente une épaisseur d'environ 20 µm à environ 100 µm.

9. Batterie ou accumulateur ou électrolyseur ou cellule galvanique comportant une électrode à diffusion gazeuse (1) selon l'une des revendications 1 à 8.
